(19) Europäisches Patentamt
European Patent Office
Office européen des brevets

(11) **EP 1 642 763 A1**

(12) **DEMANDE DE BREVET EUROPEEN**

(43) Date de publication:
05.04.2006 Bulletin 2006/14

(51) Int Cl.:
*B60K 31/00* (2006.01)  *B60L 15/20* (2006.01)
*B60R 16/02* (2006.01)

(21) Numéro de dépôt: 05300781.1

(22) Date de dépôt: 27.09.2005

(84) Etats contractants désignés:
AT BE BG CH CY CZ DE DK EE ES FI FR GB GR HU IE IS IT LI LT LU LV MC NL PL PT RO SE SI SK TR
Etats d'extension désignés:
AL BA HR MK YU

(30) Priorité: 29.09.2004 FR 0452190

(71) Demandeur: Peugeot Citroen Automobiles S.A.
78140 Vélizy Villacoublay (FR)

(72) Inventeurs:
• THAUVIN, Nicolas
31 rue de la Bruyère,
78000, VERSAILLES (FR)
• ROMIEUX, Sébastien
94320, THIAIS (FR)
• LANNELONGUE, Emmanuel
PARIS, 75001 (FR)

(74) Mandataire: Fernandez, Francis Lionel
Peugeot Citroen Automobiles SA
Route de Gisy
78140 Velizy-Villacoublay (FR)

(54) **Procédé et système d'identification d'un trajet effectué par un vehicule.**

(57) Système d'identification d'un trajet effectué par un véhicule.

Selon l'invention, ledit système comprend :

- des moyens (11, 12) de localisation aptes à déterminer sur ledit trajet un couple courant de segments géographiques, constitué d'un segment courant et du segment suivant ledit segment courant,

- une base (20) de trajets antérieurs définis au moins en terme de couples de segments géographiques,

- un moyen de reconnaissance apte à comparer ledit couple courant aux couples contenus dans ledit trajet antérieur.

Application à l'industrie automobile.

FIG. 1

EP 1 642 763 A1

**Description**

La présente invention concerne un procédé et un système d'identification d'un trajet effectué par un véhicule. Elle concerne également une application dudit procédé et dudit système à la fourniture à des organes du véhicule d'informations relatives audit trajet.

L'invention trouve une application particulièrement avantageuse dans le domaine de l'industrie automobile, notamment dans la transmission d'informations à certains organes des véhicules concernant le profil de roulage qu'ils sont susceptibles de rencontrer au cours du trajet effectué.

Les systèmes de navigation sont habituellement utilisés pour guider le conducteur d'un véhicule depuis l'endroit où il se trouve jusqu'à son point d'arrivée.

Dans ce type d'utilisation, le système de navigation a connaissance du trajet futur que le véhicule est censé suivre. Il a donc la possibilité de renseigner par avance certains organes du véhicule (système de dépollution, climatisation, contrôle moteur, thermique moteur,...) sur les conditions de roulage (urbain, route, autoroute,...) dans lesquelles ils devront fonctionner.

Pour que le système de navigation puisse transmettre effectivement une description du trajet aux organes du véhicule concernés, le conducteur doit renseigner le point d'arrivée et demander un guidage, du moins dans le cadre des systèmes de navigation traditionnels.

Il faut donc attendre que le conducteur éprouve la nécessité de recourir à un guidage, c'est-à-dire quand il est perdu ou quand il se rend dans un lieu inconnu, pour que les organes intéressés puissent bénéficier d'une description du trajet effectué.

Aussi, le problème technique à résoudre par l'objet de la présente invention est de proposer un procédé et un système d'identification d'un trajet courant effectué par un véhicule, qui pourraient être mis en oeuvre de manière automatique et systématique, sans l'intervention du conducteur, sans faire d'hypothèses sur l'application des informations qui pourront être tirées de l'identification du trajet en cours, et en optimisant le temps d'exécution nécessaire à l'identification recherchée, ainsi que la taille d'une base de données dans laquelle sont stockés des trajets identifiés.

La solution au problème technique posé consiste, selon l'invention, en ce que ledit procédé comprend les étapes consistant à :

- définir, initialement, au moins un trajet antérieur au moins en terme de couples de segments géographiques,
- puis, lors d'un trajet, déterminer sur ledit trajet un couple courant de segments géographiques, constitué d'un segment courant et du segment suivant ledit segment courant, et comparer ledit couple courant aux couples contenus dans ledit trajet antérieur.

De même, selon l'invention, ledit système comprend :

- des moyens de localisation aptes à déterminer sur ledit trajet un couple courant de segments géographiques, constitué d'un segment courant et du segment suivant ledit segment courant,
- une base de trajets antérieurs définis au moins en terme de couples de segments géographiques,
- un moyen de reconnaissance apte à comparer ledit couple courant aux couples contenus dans ledit trajet antérieur.

Si la comparaison est positive avec un trajet antérieur connu présent dans la base de trajets, alors le trajet courant est identifié comme étant ce trajet antérieur.

Bien entendu, cette comparaison par rapport à la base de trajets est effectuée à chaque fois que le système de localisation met à jour le positionnement du véhicule.

Par ailleurs, l'invention prévoit qu'en cas de comparaison négative, les couples courants de segments dudit trajet sont enregistrés en tant que couples de segments d'un nouveau trajet antérieur.

En d'autres termes, le trajet courant qui ne peut être identifié comme un trajet antérieur connu présent dans la base de trajets entre à son tour dans la base comme nouveau trajet antérieur pour servir à la comparaison avec un trajet courant lors d'une identification ultérieure.

L'invention prévoit également qu'en cas de comparaison positive avec une pluralité de trajets antérieurs, ledit procédé comporte une étape de détermination d'un trajet antérieur le plus probable au moyen de critères complémentaires.

Il s'agit d'affiner l'identification du trajet courant lorsque le résultat de la comparaison fondée sur les couples de segments conduit à une indétermination liée notamment au fait que des trajets différents peuvent comporter des tronçons géographiques communs. On a alors recours à d'autres moyens de comparaison que les moyens purement géographiques représentés par les couples de segments, ce sont lesdits critères complémentaires qui sont liés à d'autres données caractéristiques décrivant le trajet.

Selon l'invention, ladite étape de détermination consiste à calculer un poids affecté à chaque trajet antérieur de ladite pluralité en fonction desdits critères complémentaires associés audit trajet.

Lesdits critères complémentaires sont choisis, séparément ou en combinaison, notamment parmi les critères suivants :

- occurrence d'un trajet par jour de la semaine,
- occurrence d'un trajet par plage horaire,
- occurrence d'un trajet par plage horaire dans un jour de la semaine,
- occurrence totale d'un trajet,
- ancienneté d'un trajet.

Ainsi, une indétermination sur les trajets antérieurs possibles pourra être levée en éliminant un de ces trajets du fait que, par exemple, il n'a jamais été utilisé auparavant le jour de la semaine où s'effectue le trajet courant à identifier.

D'autre part, il est prévu par l'invention que, lors d'un trajet, ledit procédé comporte une étape d'enregistrement de données caractéristiques dudit trajet.

En particulier, selon l'invention, en cas d'identification dudit trajet à un trajet antérieur, ledit procédé comporte une étape de mise à jour de données caractéristiques dudit trajet antérieur.

Conformément à l'invention, lesdites données caractéristiques comprennent, séparément ou en combinaison, notamment :

- la liste des segments constituant un trajet,
- la plage horaire,
- la date du dernier parcours sur le trajet,
- la vitesse moyenne et l'écart-type,
- le jour de la semaine de parcours sur le trajet,
- le nombre d'occurrences sur un jour de la semaine donné,
- le nombre d'occurrences sur une plage horaire donnée,
- le nombre total d'occurrences,
- la durée du parcours sur le trajet suivant le jour et/ou la plage horaire,
- le nombre d'arrêts du véhicule sur le trajet.

Dans une application du procédé et du système conformes à l'invention à la fourniture à des organes du véhicule d'informations relatives audit trajet, on prévoit que lesdits organes concernent, séparément ou en combinaison :

- le moteur thermique,
- la(les) machine(s) électrique(s) dans le cas d'un véhicule hybride,
- la climatisation,
- les moyens de dépollution.

La description qui va suivre en regard des dessins annexés, donnés à titre d'exemples non limitatifs, fera bien comprendre en quoi consiste l'invention et comment elle peut être réalisée.

La figure 1 est un schéma donnant l'architecture d'un système d'identification de trajets conforme à l'invention.
La figure 2 est un schéma montrant l'organisation d'une base de trajets du système de la figure 1.

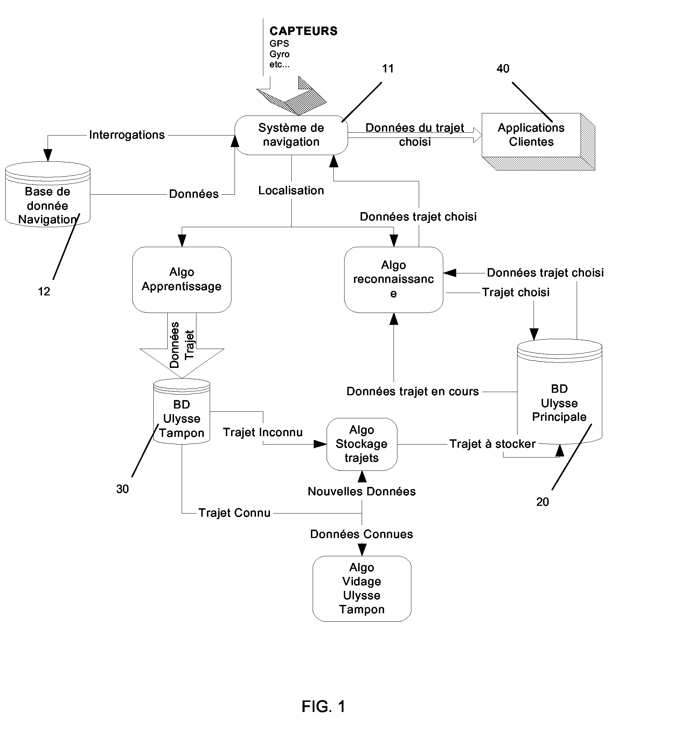

Sur la figure 1 est représenté un système d'identification d'un trajet effectué par un véhicule, comprenant des moyens de localisation permettant d'effectuer une localisation géographique précise du véhicule dans le but de définir sur le trajet courant emprunté un couple de segments constitué du segment courant et du segment suivant .

Ces moyens de localisation comprennent, comme le montre la figure 1, un système 11 de navigation utilisant des capteurs standard (GPS, gyroscopes,...), associé à une base 12 de données géographique. Cette dernière fournit l'information qui permet de référencer chaque tronçon du trajet.

Le système de la figure 1 comprend également une base 20 de trajets dans laquelle est enregistrée la description des trajets habituels antérieurement utilisés par le véhicule.

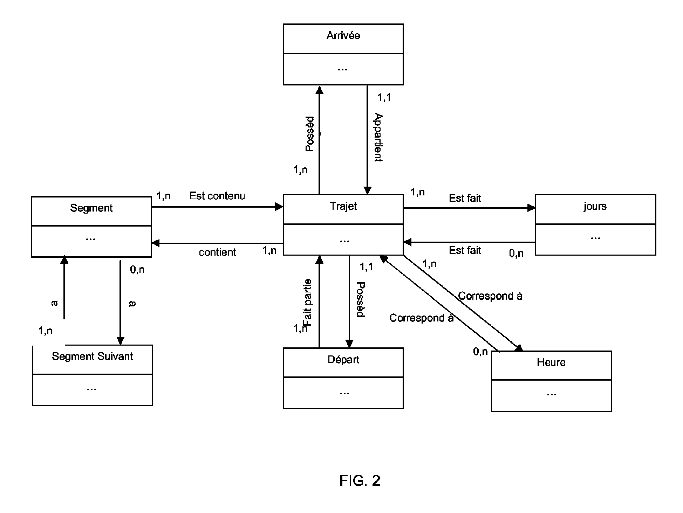

Cette description est réalisée lors du premier roulage sur chaque trajet et comprend une description purement géographique en terme de couples de segments, comme cela sera décrit plus loin en regard de la figure 2, ainsi que d'autres données caractéristiques du trajet, tels que :

- la liste des segments constituant un trajet,
- la plage horaire,

- la date du dernier parcours sur le trajet,
- la vitesse moyenne et l'écart-type,
- le jour de la semaine de parcours sur le trajet,
- le nombre d'occurrences sur un jour de la semaine donné,
- le nombre d'occurrences sur une plage horaire donnée,
- le nombre total d'occurrences,
- la durée du parcours sur le trajet suivant le jour et/ou la plage horaire,
- le nombre d'arrêts du véhicule sur le trajet.

L'ensemble de ces informations est utilisé pour identifier le trajet courant effectué par le véhicule en commençant par une comparaison géographique avec les trajets antérieurs stockés dans la base 20 de trajets, suivie, si celle-ci conduit à une indétermination entre plusieurs trajets antérieurs possibles ayant une première partie commune, à une comparaison portant sur des critères complémentaires extraits des données caractéristiques définies plus haut.

Ces comparaisons sont effectuées par un moyen, ou algorithme, de reconnaissance.

Ces critères complémentaires sont essentiellement de caractère temporel, il s'agit par exemple de :

- l'occurrence d'un trajet par jour de la semaine,
- l'occurrence d'un trajet par plage horaire,
- l'occurrence d'un trajet par plage horaire dans un jour de la semaine,
- l'occurrence totale d'un trajet,
- l'ancienneté d'un trajet.

Plus précisément, l'indétermination est levée de manière à pouvoir faire un choix statistique entre les différents trajets antérieurs en calculant un poids affecté à chaque trajet antérieur en fonction desdits critères complémentaires associés audit trajet. Ce calcul sera détaillé plus loin dans la description.

Lesdites données caractéristiques permettent également de fournir à certains organes 40 du véhicule une indication quant à la variation à venir d'un paramètre particulier tel que la vitesse moyenne du véhicule, la puissance moyenne à la roue, etc. A partir de la connaissance et la transmission de la prévision d'évolution de ces paramètres sur un trajet donné, il est possible d'améliorer par anticipation le fonctionnement des organes considérés.

Rappelons que les organes intéressés par ces dispositions avantageuses concernent :

- le moteur thermique,
- la(les) machine(s) électrique(s) dans le cas d'un véhicule hybride,
- la climatisation,
- les moyens de dépollution.

Les comparaisons par rapport à la base 20 de trajets décrites plus haut sont effectuées à chaque fois que les moyens 11, 12 de localisation mettent à jour la position du véhicule sur son trajet.

On observe sur la figure 1 la présence d'une base tampon 30 qui recueille temporairement les données du trajet courant. Si ce trajet est identifié par le système comme un trajet antérieur connu, alors une mise à jour de la base 20 de trajets est effectuée en tenant compte des données extraites du trajet courant. Si le trajet est identifié comme nouveau, alors les données relatives à ce trajet sont stockées dans la base 20 de trajets en tant que nouveau trajet antérieur.

Il est également prévu un mécanisme de rafraîchissement destiné à ne conserver que les trajets les plus pertinents et à optimiser ainsi l'espace de stockage.

La base de trajets de la figure 2 devant fonctionner en temps réel dans un calculateur embarqué, elle doit être optimisée en terme de taille, mais aussi en terme de temps d'exécution des algorithmes mis en jeu, à savoir essentiellement le temps d'accès aux données.

Dans ce but, la structure proposée pour la base de trajets repose sur un élément de base constitué par un couple de segments formé de deux identifiants de segment : le segment courant et le segment suivant dans le trajet.

La description géographique d'un trajet comprend donc un ensemble de couples de segments. Ainsi, lors du premier roulage, l'ensemble des couples de segments constituant un trajet est mémorisé. Le principe pour vérifier que le véhicule se trouve sur un trajet antérieur déjà mémorisé est de vérifier que le couple courant est contenu dans la base. La connaissance du couple suivant conduit à la détermination du sens du parcours sur un trajet donné.

Une simple requête auprès de la base 20 de trajets permet de connaître tous les trajets antérieurs possibles contenant le couple sur lequel se trouve le véhicule. Dans le cas où le couple appartient à plusieurs trajets possibles, un choix doit être fait de la façon qui sera exposée plus loin.

En résumé, partant d'un couple de segments (segment courant et segment suivant), le système d'identification détermine dans la base 20 de trajets l'ensemble des trajets possibles, c'est-à-dire l'ensemble des trajets déjà effectués par le véhicule et comportant le couple de segments considéré.

Dans le cas où le couple du trajet courant n'appartient à aucun trajet antérieur déjà mémorisé, alors le trajet courant sur lequel se trouve le véhicule n'a jamais été emprunté auparavant et il n'est pas mémorisé. Le système de navigation ne peut donc transmettre aucune description du trajet aux autres organes.

Dans le cas où le couple de segments n'appartient qu'à un seul trajet, le système peut transmettre la description du trajet contenu dans la base 20 de trajets entre le point où se trouve le véhicule et la fin du trajet mémorisé sans avoir à faire de choix.

Dans le cas où le couple de segments appartient à plusieurs trajets, le système doit choisir le trajet le plus probable parmi plusieurs trajets possibles. Le système calcule alors pour chaque trajet antérieur possible un poids, équivalent à une probabilité, qui dépend des différents critères extraits des données caractéristiques de trajets mentionnées plus haut. Le trajet le plus probable est celui qui aura le poids le plus élevé.

Avec les critères précédemment définis, on calcule pour chaque trajet possible les quantités suivantes :

$$PoidsTrajet1 = PoidsJour \times OccurenceJour + PoidsHeure \times OccurenceHeure$$
$$+ PoidsJourHeure \times OccurenceHeure \times OccurenceJourHeure$$
$$+ PoidsOccurenceTotale \times NbTotalOccurence$$

$$PoidsTrajet2 = PoidsJour + PoidsHeure + PoidsJourHeure$$
$$+ PoidsOccurenceTotale$$

$$PoidsTrajet3 = 100 \times /(NbJours - NbJoursOubliés)/NbJours$$

*PoidsJour, PoidsHeure, PoidsJourHeure, PoidsOccurenceTotale* sont des coefficients de réglage qui permettent de donner plus ou moins d'importance au critère complémentaire correspondant.

*OccurenceJour, OccurenceHeure, OccurenceJourHeure, NbTotalOccurence* sont les valeurs des critères complémentaires, contenus dans la base de trajets, pour le trajet considéré.

*NbJours* est le nombre de jours qui séparent la date courante de la date du dernier parcours du trajet considéré.

*NbJoursOubliés* est un paramètre indiquant que le trajet est ancien et qu'il n'est pas nécessaire de lui donner un poids important.

On peut alors définir un poids noté *Poids\*Trajet* égal par exemple à :

$$PoidsTrajet = PoidsTrajet1 \times PoidsTrajet3 \times PoidsTrajet4/PoidsTrajet2$$

*PoidsTrajet4* est un coefficient recalculé à chaque nouveau tronçon et pour chaque trajet déjà enregistré auquel appartient ce tronçon. Le résultat est cumulé et augmente ainsi lorsque le trajet est reconnu. Ceci permet d'éviter des sauts de trajets reconnus lorsqu'ils possèdent des tronçons communs.

En cours de roulage, toutes les données caractéristiques des tronçons sur lequel le véhicule a roulé sont stockées dans la base tampon 30.

En fin de roulage, lors de la coupure du contact, le système compare la description géographique du trajet contenu dans la base tampon 30 à celle de tous les trajets contenus dans la base 20 de trajets. Suivant le résultat de la comparaison, on détermine si le trajet est connu ou pas.

La comparaison s'effectue couple à couple et elle est filtrée pour diminuer le bruit lié à l'imprécision de positionnement. A chaque trajet est alors associé un pourcentage de comparaison, seuls les attributs du trajet ayant le pourcentage de comparaison le plus élevé sont mis à jour.

Si ce pourcentage est supérieur au seuil défini par la relation suivante :

$$Seuil = SEUIL\_MIN + (SEUIL\_MAX - SEUIL\_MIN) \times (1 - exp(- NbElts/200)$$

où *SEUIL_MIN = 70%, SEUIL_MAX = 95%* et *NbElts* est le nombre de couples dans le trajet effectué, alors on considère que le trajet est déjà dans la base, sinon c'est un nouveau trajet.

Dans le cas d'un trajet connu, on met à jour les données du trajet reconnu dans la base 20 de trajets.

Dans le cas d'un trajet inconnu, on ajoute le trajet dans la base 20 de trajets avec les données correspondantes.

## Revendications

1. Procédé d'identification d'un trajet effectué par un véhicule, **caractérisé en ce que** ledit procédé comprend les étapes consistant à :

   - définir, initialement, au moins un trajet antérieur au moins en terme de couples de segments géographiques,
   - puis, lors d'un trajet, déterminer sur ledit trajet un couple courant de segments géographiques, constitué d'un segment courant et du segment suivant ledit segment courant, et comparer ledit couple courant aux couples contenus dans ledit trajet antérieur.

2. Procédé selon la revendication 1, **caractérisé en ce qu'**en cas de comparaison négative, les couples courants de segments dudit trajet sont enregistrés en tant que couples de segments d'un nouveau trajet antérieur.

3. Procédé selon la revendication 1, **caractérisé en ce qu'**en cas de comparaison positive avec une pluralité de trajets antérieurs, ledit procédé comporte une étape de détermination d'un trajet antérieur le plus probable au moyen de critères complémentaires.

4. Procédé selon la revendication 3, **caractérisé en ce que** ladite étape de détermination consiste à calculer un poids affecté à chaque trajet antérieur de ladite pluralité en fonction desdits critères complémentaires associés audit trajet.

5. Procédé selon l'une des revendications 3 ou 4, **caractérisé en ce que** lesdits critères complémentaires sont choisis, séparément ou en combinaison, parmi les critères suivants :

   - occurrence d'un trajet par jour de la semaine,
   - occurrence d'un trajet par plage horaire,
   - occurrence d'un trajet par plage horaire dans un jour de la semaine,
   - occurrence totale d'un trajet,
   - ancienneté d'un trajet.

6. Procédé selon la revendication 5, **caractérisé en ce que** ledit poids est défini à partir de :

$$PoidsTrajet1 = PoidsJour \times OccurenceJour + PoidsHeure \times OccurenceHeure$$
$$+ PoidsJourHeure \times OccurenceHeure \times OccurenceJourHeure$$
$$+ PoidsOccurenceTotale \times NbTotalOccurence$$

$$PoidsTrajet2 = PoidsJour + PoidsHeure + PoidsJourHeure$$
$$+ PoidsOccurenceTotale$$

$$PoidsTrajet3 = 100 \times /(NbJours - NbJoursOubliés)/NbJours$$

où

*NbJours* est le nombre de jours qui séparent la date courante de la date du dernier parcours du trajet considéré,
*NbJoursOubliés* est un paramètre indiquant que le trajet est ancien.

**7.** Procédé selon la revendication 6, **caractérisé en ce que** ledit poids est défini par :

$$PoidsTrajet = PoidsTrajet1 \times PoidsTrajet3 \times PoidsTrajet4/PoidsTrajet2,$$

*PoidsTrajet4* étant un coefficient recalculé à chaque nouveau tronçon et pour chaque trajet déjà enregistré auquel appartient ce tronçon.

**8.** Procédé selon l'une quelconque des revendications 1 à 7, **caractérisé en ce que**, lors d'un trajet, ledit procédé comporte une étape d'enregistrement de données caractéristiques dudit trajet.

**9.** Procédé selon la revendication 8, **caractérisé en ce qu'**en cas d'identification dudit trajet à un trajet antérieur, ledit procédé comporte une étape de mise à jour de données caractéristiques dudit trajet antérieur.

**10.** Procédé selon l'une des revendications 8 ou 9, **caractérisé en ce que** lesdites données caractéristiques comprennent, séparément ou en combinaison :

- la liste des segments constituant un trajet,
- la plage horaire,
- la date du dernier parcours sur le trajet,
- la vitesse moyenne et l'écart-type,
- le jour de la semaine de parcours sur le trajet,
- le nombre d'occurrences sur un jour de la semaine donné,
- le nombre d'occurrences sur une plage horaire donnée,
- le nombre total d'occurrences,
- la durée du parcours sur le trajet suivant le jour et/ou la plage horaire,
- le nombre d'arrêts du véhicule sur le trajet.

**11.** Système d'identification d'un trajet effectué par un véhicule, **caractérisé en ce que** ledit système comprend :

- des moyens (11, 12) de localisation aptes à déterminer sur ledit trajet un couple courant de segments géographiques, constitué d'un segment courant et du segment suivant ledit segment courant,
- une base (20) de trajets antérieurs définis au moins en terme de couples de segments géographiques,
- un moyen de reconnaissance apte à comparer ledit couple courant aux couples contenus dans ledit trajet antérieur.

**12.** Système selon la revendication 11, **caractérisé en ce que** ledit moyen de reconnaissance est également apte à comparer des critères complémentaires.

**13.** Système selon la revendication 12, **caractérisé en ce que** lesdits critères complémentaires sont choisis, séparément ou en combinaison, parmi les critères suivants :

- occurrence d'un trajet par jour de la semaine,
- occurrence d'un trajet par plage horaire,
- occurrence d'un trajet par plage horaire dans un jour de la semaine,
- occurrence totale d'un trajet,
- ancienneté d'un trajet.

**14.** Système selon l'une quelconque des revendications 11 à 13, **caractérisé en ce que** ladite base (20) de trajets contient des données caractéristiques comprenant, séparément ou en combinaison :

- la liste des segments constituant un trajet,
- la plage horaire,

- la vitesse moyenne et l'écart-type,
- la date du dernier parcours sur le trajet,
- le jour de la semaine de parcours sur le trajet,
- le nombre d'occurrences sur un jour de la semaine donné,
- le nombre d'occurrences sur une plage horaire donnée,
- le nombre total d'occurrences,
- la durée du parcours sur le trajet suivant le jour et/ou la plage horaire,
- le nombre d'arrêts du véhicule sur le trajet.

**15.** Système selon l'une quelconque des revendications 11 à 14, **caractérisé en ce qu'**il comporte une base tampon (30) apte à stocker temporairement les données du trajet courant.

**16.** Application du procédé et du procédé selon les revendications précédentes à la fourniture à des organes du véhicule d'informations relatives audit trajet.

**17.** Application selon la revendication 16, **caractérisée en ce que** lesdits organes concernent, séparément ou en combinaison :

- le moteur thermique,
- la(les) machine(s) électrique(s) dans le cas d'un véhicule hybride,
- la climatisation,
- les moyens de dépollution.

**CAPTEURS**
GPS
Gyro
etc...

11

40

Interrogations

Système de navigation

Données du trajet choisi

Applications Clientes

Base de donnée Navigation

Données

Localisation

12

Données trajet choisi

Algo Apprentissage

Algo reconnaissance

Données trajet choisi

Trajet choisi

Données Trajet

Données trajet en cours

BD Ulysse Principale

BD Ulysse Tampon

Trajet Inconnu

Algo Stockage trajets

Trajet à stocker

30

Nouvelles Données

20

Trajet Connu

Données Connues

Algo Vidage Ulysse Tampon

FIG. 1

FIG. 2

**Office européen des brevets**

# RAPPORT DE RECHERCHE EUROPEENNE

Numéro de la demande

EP 05 30 0781

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | US 5 919 246 A (WAIZMANN ET AL) 6 juillet 1999 (1999-07-06) * colonne 1, ligne 37 - ligne 55 * * colonne 3, ligne 17 - ligne 53 * * colonne 4, ligne 22 - colonne 5, ligne 59 * * figure 1 * | 1-15 | B60K31/00 B60L15/20 B60R16/02 |
| X | EP 0 697 686 A (BAYERISCHE MOTOREN WERKE AKTIENGESELLSCHAFT, PATENTABTEILUNG AJ-3; BAY) 21 février 1996 (1996-02-21) * colonne 1, ligne 19 - ligne 55 * * colonne 2, ligne 11 - ligne 17 * * colonne 3, ligne 1 - colonne 4, ligne 19 * * figure 1 * | 1-15 | |
| X | DE 198 39 378 A1 (ROBERT BOSCH GMBH) 9 mars 2000 (2000-03-09) * colonne 1, ligne 40 - ligne 66 * * colonne 2, ligne 20 - ligne 27 * * colonne 4, ligne 58 - colonne 5, ligne 54 * * colonne 6, ligne 7 - ligne 57 * * figures 1-4 * | 1-15 | |
| X | GB 2 399 442 A (KABUSHIKIKAISHA * EQUOS RESEARCH; * ZAIDAN HOJIN NAGOYA SANGYO KAGAKU) 15 septembre 2004 (2004-09-15) * page 1 * * page 3, alinéa 3 * * page 11, alinéa 1 * * page 12, alinéa 3 * * page 13 - page 14 * * page 21, alinéa 2 - alinéa 3 * * page 24, alinéa 4 - alinéa 6 * * figures 1-4,14,16,18 * | 1,3,5, 8-13,16, 17 | |

DOMAINES TECHNIQUES RECHERCHES (IPC)

G01C
B60K
B60L
B60R

Le présent rapport a été établi pour toutes les revendications

| Lieu de la recherche | Date d'achèvement de la recherche | Examinateur |
|---|---|---|
| La Haye | 13 janvier 2006 | Yosri, S |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

**ANNEXE AU RAPPORT DE RECHERCHE EUROPEENNE**
**RELATIF A LA DEMANDE DE BREVET EUROPEEN NO.**                    EP 05 30 0781

La présente annexe indique les membres de la  famille de brevets relatifs aux documents  brevets cités dans le rapport de recherche européenne visé ci-dessus.
Lesdits members sont contenus au fichier informatique de l'Office européen des brevets à la date du
Les renseignements fournis sont donnés à titre  indicatif et n'engagent pas la responsabilité  de l'Office européen des brevets.

13-01-2006

| Document brevet cité au rapport de recherche | | Date de publication | Membre(s) de la famille de brevet(s) | | Date de publication |
|---|---|---|---|---|---|
| US 5919246 | A | 06-07-1999 | AT | 189056 T | 15-02-2000 |
| | | | AU | 3696895 A | 02-05-1996 |
| | | | WO | 9611380 A1 | 18-04-1996 |
| | | | EP | 0805951 A1 | 12-11-1997 |
| | | | ES | 2140713 T3 | 01-03-2000 |
| | | | FI | 971419 A | 04-04-1997 |
| EP 0697686 | A | 21-02-1996 | DE | 4429322 A1 | 22-02-1996 |
| | | | ES | 2185674 T3 | 01-05-2003 |
| DE 19839378 | A1 | 09-03-2000 | WO | 0012967 A1 | 09-03-2000 |
| GB 2399442 | A | 15-09-2004 | DE | 102004010870 A1 | 30-09-2004 |
| | | | JP | 2004282848 A | 07-10-2004 |
| | | | US | 2004230376 A1 | 18-11-2004 |

EPO FORM P0460

Pour tout renseignement concernant cette annexe : voir Journal Officiel de l'Office européen des  brevets, No.12/82